# EUROPEAN PATENT SPECIFICATION

(11) **EP 0 681 603 B1**
(45) Date of publication and mention of the grant of the patent: **31.03.1999**
(21) Application number: 93903580.4
(22) Date of filing: 19.01.1993
(51) Int. Cl.: C10L 5/12, C10L 5/14, C10L 5/16, C10L 5/44, C10L 5/46, C10J 3/00, C10L 5/40

(54) **FUEL PELLETS OR BRIQUETTES MADE FROM SEWAGE SLUDGE SOLIDS AND COMBUSTIBLE SOLID WASTE**
BRENNSTOFF PELLETS ODER BRIQUETTES HERGESTELLT AUS KLÄRSCHLAMM UND BRENNBAREN FESTEN ABFALLSTOFFEN
PASTILLES OU BRIQUETTES COMBUSTIBLES PREPAREES A PARTIR DE BOUES ACTIVEES SOLIDIFIEES ET DE RESIDUS COMBUSTIBLES SOLIDES

(43) Date of publication of application: 15.11.1995
(73) Proprietor: DYNECOLOGY INC., Harrison, NY 10528 (US)
(72) Inventor: DYNECOLOGY INC., Harrison, NY 10528 (US)
(74) Representative: Schupfner, Gerhard D.
(86) International application number: US9300472
(87) International publication number: WO9417161

(56) References cited:
- DE-A- 3 226 798
- DE-A- 3 619 725
- US-A- 881 192
- US-A- 1 195 784
- US-A- 3 910 775
- US-A- 4 052 173
- US-A- 4 152 119
- US-A- 4 225 457
- US-A- 5 125 931

## Description

This invention relates to fuel briquettes from sewage sludge solids and municipal solid wastes. In one of its more specific aspects, this invention relates to a solid briquetted fuel product consisting essentially of sewage sludge solids, municipal solid waste, and caking coal and to its method of preparation. In still another of its specific aspects, this invention relates to a method for the disposal of sewage sludge, waste paper, and municipal solid waste by conversion of such waste matter to useful energy.

### Background of the Invention

Various methods have been disclosed heretofore for the disposal of sewage sludge wastes. For the past several years, it has been customary in areas along the Eastern Seaboard, and particularly in the New York City area, to load sewage sludge into barges which are towed out to sea and dumped into the ocean. Alternative methods of disposal include dewatering the sewage sludge by centrifuges and dumping the dewatered sewage sludge solids in land fill areas. Dumping at sea is becoming more and more restricted as a disposal method while, at the same time, metropolitan areas are rapidly running out of available land fill sites.

Incineration of sewage sludge solids has been proposed but, is not an attractive method of disposal due to the water content of moist centrifuged sludges or filter cake solids, which typically contain 65 to 75 weight percent water after concentration by conventional filtering or centrifuging methods.

The art of pressing coal into briquettes is well known. The objective has been principally to utilize coal fines by compacting them into a more easily handled and stored fuel. The compaction or pelleting of municipal refuse, together with waste coal products also has been proposed. Jackman, in U.S. Patent No. 3,910,775, disclosed the briquetting of coal including coal fines with organic wastes. In this patent, minor quantities of acidic coal fines are apparently used for the purpose of reducing the pH of a sewage stream filtered through the prepared briquettes to precipitate phosphates present in the waste water.

My U.S. Patents 4,225,457, 4,152,119, 4,052,173, and 5,125,931, disclose the production of briquettes from sewage sludge and coal, and from coal and municipal solid wastes, and their gasification in a moving bed solid fuel gasifier.

### Summary of the Invention

This invention provides fuel briquettes from a mixture of dewatered sewage sludge (DSS), refuse derived fuel (RDF) obtained from municipal solid waste (MSW) and/or paper waste, optionally including crushed coal and coal fines. A primary object of this invention is to provide a process for forming fuel briquettes from a mixture of such materials without the necessity for predrying the components prior to formation of the briquettes.

The product briquettes formed by the process of this invention are especially useful as fuels in existing solid fuel gasifiers and as fuel in direct-fired boilers and furnaces. A preferred fuel composition contains crushed coal including all fines, dewatered sewage sludge and refuse derived fuel and/or paper waste. Briquettes of dewatered sewage sludge and refuse derived fuel or paper waste may be made without coal, shipped to the site of a coal deposit or to the point of consumption, and then reformulated with finely divided coal into higher heating value fuel briquettes.

In a specific embodiment of the invention, a mixture of dewatered sewage sludge containing from about 25 to about 40 percent solids by weight is mixed with a sufficient quantity of comminuted cellulosic waste and finely divided coal to form a mixture having a moisture content in the range of from about 12 to about 22 weight percent and pressed into fuel briquettes.

### Description of the Drawings

Fig. 1 is a diagrammatic illustration of a preferred method of producing and utilizing a solid fuel product from sewage sludge and other municipal solid wastes including waste paper and refuse derived fuel.

Fig. 2 is a simplified perspective view of a typical rotary briquette press suitable for use in the process of this invention.

### Detailed Description of Process

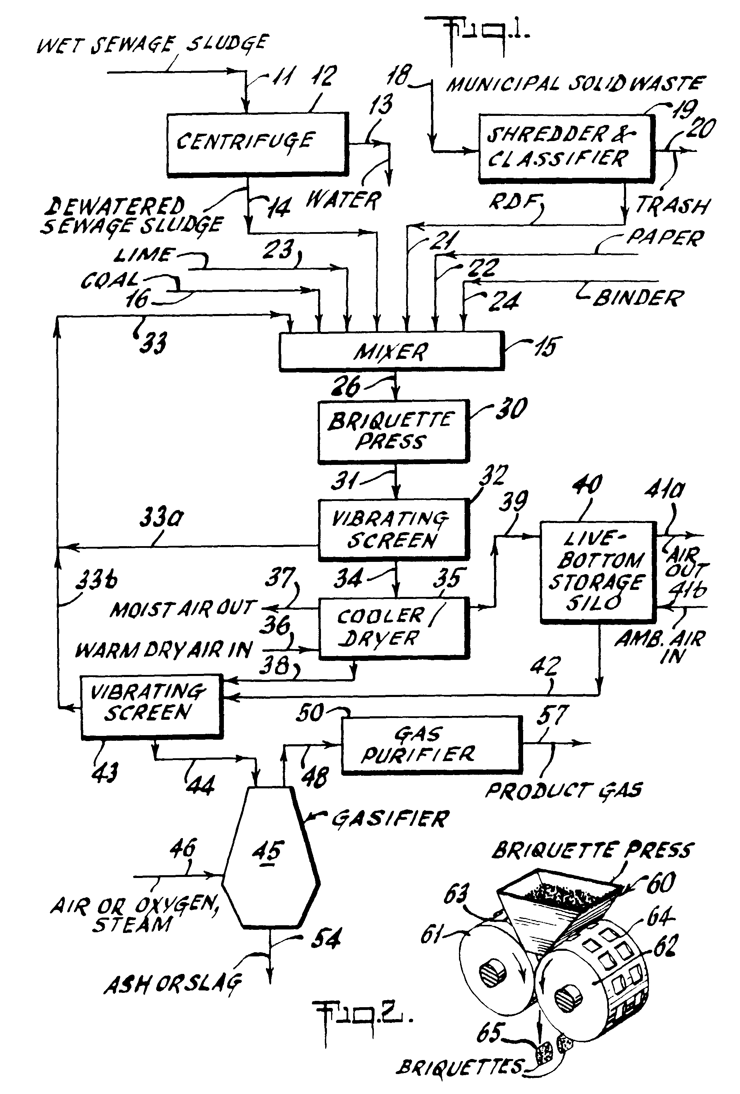

With reference to Fig. 1 of the drawing, illustrating a preferred embodiment of the process of the present invention, wet sewage sludge containing for example, 3 to 7 percent solids by weight is supplied through line 11 to a dewatering unit 12, suitably in the form of a centrifuge which concentrates the sewage sludge to a solids concentration in the range of 25 to 40 percent by weight. Water separated from the wet sewage sludge is discarded via line 13.

Dewatered sewage sludge (DSS) from centrifuge 12 is passed through line 14 to a solids mixer 15 where the dewatered sludge is mixed with crushed or pulverized coal supplied through line 16. Municipal solid waste from line 18 is supplied to shredder and classifier 19 where dirt, metal, glass, and other inorganic matter is separated from combustible organic matter and discarded through line 20 as trash. The separated combustible organic matter, herein designated "refuse derived fuel" or RDF, is supplied to mixer 15 through line 21. Shredded dry milled waste paper is supplied to mixer 15 through line 22. Additives, e.g. lime if required, are introduced into mixer 15 through line 23. Binders, if needed, may be added to mixer 15 through line 24. Suitable binders include blackstrap molasses, and black liquor from the paper industry. Binder, when required, is introduced into the mixture in an amount equivalent to 3 to 6 percent by weight of the mixture based on the dry weights of all components.

The relative proportions of RDF, paper waste, coal, DSS, and binder if employed, are adjusted such that the water content of the mixture is in the range of from about 12 to about 22 percent by weight. It has been discovered that a moisture content in this range produces strong compact pellets or briquettes. The optimum moisture content depends upon characteristics of the particular feed materials employed, the relative proportion of each material in the feed mixture, and upon the compaction method. For example, pellet extrusion requires a higher moisture content (up to 22 percent) in the feed mixture in order to prevent charring during extrusion. For typical coal/DSS/RDF mixtures formed into briquettes using a rotary press, the moisture content of the composition discharged from mixer 15 and supplied via line 26 to briquette press 30 is preferably in the range of from about 14 to about 19 weight percent.

The briquettes Are formed by pressing the mixture in forming press 30, preferably a rotary press of the type illustrated diagrammatically in Fig. 2, wherein the composition is formed into briquettes under pressure, typically in the range of 207 to 345 bar (3000 to 5000 psi.) A suitable press is available from Bepex Corporation, Minneapolis, Minnesota.

Briquettes leaving the press through line 31 are steaming hot from the energy expended in forming them. It is desirable to dry the freshly pressed briquettes further before use as fuel in a gasifier, primarily to permit the briquettes to develop greater mechanical strength. The briquettes leaving cooler/dryer 35 suitably have a moisture content in the range of 10 to 12 percent by weight.

In a preferred embodiment of the process of this invention, briquettes from press 30 drop via path 31 onto vibrating screen 32 where fines are removed via line 33a for recycle to mixer 15. The briquettes continue via line 34 through cooler/dryer 35 where the briquettes are contacted with ambient or heated atmospheric air from line 36. Briquettes from cooler/dryer 35 are sent via line 39 to storage silo 40 where further drying occurs by means of forced ambient air flowing in through line 41a and out through line 41b. Alternatively or simultaneously, briquettes from cooler/dryer 35 are sent via line 38 to vibrating screen 43 for final removal of fines which are recycled via line 33b to mixer 15. Alternatively or simultaneously, briquettes from storage silo 40 are sent via line 42 to vibrating screen 43 for final removal of fines which are recycled via line 33b to mixer 15. Briquettes from vibrating screen 43 are sent via line 44 to gasifier 45.

In gasifier 45, the briquettes are reacted with air or oxygen and steam from line 46 as disclosed in greater detail in my U.S. Patent 4,052,173. In that system, the briquettes are gasified with oxygen and steam to produce a fuel gas, synthesis gas or reducing gas comprising carbon monoxide and hydrogen and a small amount of methane. In this arrangement, raw product gas from the top of the gasifier 45 passes through line 48 to a gas purification system 50, known per se in the art, to yield the desired product gas delivered through line 52. Slag or ash is discharged from the bottom of the gasifier 45 through line 54. Gasification with oxygen permits slagging of the ash which is desirable when the ash contains environmentally objectionable components, such as heavy metal oxides.

An alternative to gasification of the briquettes with oxygen and steam in a slagging type gasifier as above described, is gasification with air in a Lurgi type "dry bottom" gasifier where the hearth temperature or grate temperature is below the melting point of the ash. Air gasification is desirable from an economic standpoint in situations where the relatively low B.t.u. content product gas may be utilized at the gasifier site. The cleaned raw product gas resulting from gasification with air typically has a kJ (B.t.u.) content of the order of 2608 to 3726 kJ/m³ (70 to 100 B.t.u's. per standard cubic foot). These gases are suitable as feed to a gas fired turbine for the generation of electric power and steam (cogeneration).

Other gasifiers, such as the Welman Galusha type gasifier, may be used in the process with gasification at pressures in the range of from about 1 to about 10 atmospheres.

Fig. 2 illustrates diagrammatically a preferred form of apparatus for producing briquettes from the moist compositions of dewatered sewage sludge, coal, paper and municipal solid wastes. In Fig. 2, the above described composition comprising coal, paper, and dewatered sewage sludge of preferred relative proportions is introduced into hopper 60 of a rotary briquette press, generally designated by numeral 30. The briquette press 30 is provided with a matched pair of pressing rolls 61 and 62. Female die elements or pockets 63 and 64 are filled with composition from hopper 60. As the rolls revolve, the pockets 63 in roll 61 mate with corresponding pockets 64 in roll 62 to form molded briquettes 65 of conventional shape.

In one of its specific embodiments, the process of this invention comprises preparing a mixture comprising crushed or finely divided coal mixed with cellulosic waste and dewatered sewage sludge and optionally, a binder selected from the group consisting of black liquor, black strap molasses, anhydrous ligninsulfonate derivatives, brewery wastes, starch wastes, lime, bentonite, bitumen and pitch. The relative proportions of the components are adjusted to produce a mixture with a water content in the range of 12 to 22 weight percent of the total composition, preferably in the range of 14 to-19 weight percent. The composition is pressed into briquettes or pellets suitable as fuel.

As used herein, the term "substantially dry" connotes paper which is dry in appearance and dry to the touch, but which may contain on the order of 5 weight percent moisture, commonly designated as "air dried" or "air dry". The term "municipal solid waste" (MSW) is sometimes referred to as "organic solid waste" and usually includes cellulosic materials, particularly paper waste, wood waste, food waste, and often plastics. Refuse derived fuel (RDF) recovered from municipal solid waste (MSW) is partially dried in the process of classification but may contain 12 to 20 percent moisture. The term briquettes is used in its broadest sense to include pellets as small as one half inch minimum dimension to large shapes having a minimum dimension of several inches.

None of the components of the briquettes of this invention normally will require drying prior to forming the mixture from which the briquettes are made. Coal on an "as received" or "air dry" basis will normally contain about 5 to 7 percent moisture by weight and "dry" paper waste may contain about 5 percent moisture. Thus a mixture of one part dewatered sewage sludge containing about 60 weight percent water, when mixed with one and one half parts paper waste and two and one half parts coal will have a moisture content of about 17 percent by weight. This mixture produces a strong coherent briquette when pressed in a mold at a pressure of 207 to 345 bar (3000 to 5000 psi).

Where the briquettes or pellets are stored (for example in a silo) prior to gasification further drying of the briquettes or pellets in ambient or heated air is desirable to enhance mechanical strength of the briquettes and to inhibit biological activities.

The present invention is therefore particularly directed to the preparation of shaped articles of manufacture consisting essentially of coal, cellulosic solids, and sewage sludge solids. It has been found that when such articles are prepared in accordance with the present invention, the ratio of coal to cellulosic waste solids and sewage solids preferably is in the range of 1:1 to 3:1 depending on the water content of the sewage sludge and that of the refuse derived fuel (RDF) and coal. In general, the ratio of refuse derived fuel (RDF) and/or paper waste to dewatered sewage sludge (DSS) may range from 1.5:1 to 5:1 or higher. As a general rule, if the ratio of coal to sewage sludge and paper solids is less than about 1:1, the pyrolyzed briquettes are deficient in the structural integrity needed to sustain the desired high gas production rates in the gasifier.

Preferred sizes and shapes of the briquettes are described in U.S. Patent No. 4,225,457. As disclosed therein, the shape of the extrusions, briquettes, or pellets may be circular or polygonal (either regular or irregular) in cross-section, and may vary in diameter from about three-quarter inch to about six inches or more. Briquettes of similar size may be stamped or pressed in the form of saddles, pillows, hollow cylinders, or doughnuts, for example. It has been found that a compaction pressure in excess of 69 bar (1000 pounds per square inch (psi)) in forming the shaped article can give good results.

Preferably, the compaction pressure is in the range of 138 to 690 bar (2,000 to 10,000 psi). The upper limit on the compaction pressure is not critical but as a practical matter, it usually will not exceed 345 bar (5,000 psi). In general, a rotating cylinder type press is preferred as illustrated in Fig. 2.

As the briquette bed gravitates downward through the upper portions of the gasifier (through the "drying zone") all free moisture is evaporated from the briquettes. This drying further strengthens the briquettes while the heat exchange serves to lower the product gas temperature, which is generally desirable. A pillow-shaped briquette about 5,72 x 5,72 x 3,8 cm (2 1/4 x 2 1/4 x 1 1/2 inch) in size with an initial moisture content, as charged to the gasifier, of about 12 percent is preferred. Substantially lower initial moisture content results in undesirably high product gas temperature. Larger briquettes require a deeper drying zone and longer residence time therein to preserve optimum temperature gradients both vertically in the gasifier bed and internally within each briquette. In general, it is advantageous to employ a pellet or briquette geometry which affords a short route for the diffusion of gases and steam from the pellet or briquette. Novel shapes, such as hollow cylinders, can offer improved gas-to-briquette heat transfer and reduced diffusion lengths for escaping vapor, but such shapes are difficult to fabricate and are generally not as strong as solid briquettes or pellets.

Briquettes and pellets of all types can be produced from cellulosic waste, sewage sludge solids, and coal, preferably caking coals, but also including anthracite coals, non-caking bituminous coals, sub-bituminous coals, lignites, or mixtures thereof. When employing non-caking coals, it may be necessary to employ an added binder, such as bitumen or pitch.

The extrusions, briquettes or pellets of the instant invention are specially formulated, designed, and fabricated to serve the functional and operational requirements of a feed material or burden that will enhance the performance of the gasification process described in U.S. Patent 4,052,173. A briquetted mixture of 3.5 parts of coal, 1.0 parts of dewatered sewage sludge (DSS) containing 30 percent solids, and 1.5 parts of refuse derived fuel (RDF) or paper waste produces an energy rich feedstock for conversion to synthesis or fuel gas in a moving burden gasifier. Caking coals, or coal fines, generally considered unsatisfactory for gasification to produce fuel gas or synthesis gas in moving bed gasifiers, may be utilized to advantage in this way. The disposal of waste paper, sewage sludge, and municipal solid waste in a common operation represents a considerable economic advantage for this process. This process transforms materials which are potential pollution problems into an energy resource which, at the same time, enhances the utility of massive reserves of caking coal not generally suited to gasification.

Lime, unslaked or slaked, may be added to the briquette formulation as a binder supplement (for example, in conjunction with sugar-based binders) and as a biostat. Lime also acts as a slag fluxing agent and to some extent as a sulfur getter. When used, the amount of lime is usually in the range of 2 to 5 percent dry weight basis. Crushed dolomite or other limestone may be charged with the briquettes, if desired, to serve as a sulfur getter.

In one of its specific embodiments, the process for fabricating briquettes or pellets comprises the following steps: a primary dewatering of liquid sewage sludge employing either a centrifuge, a rotary vacuum filter, belt filter, or a plate and frame filter press to produce a cake having a solids content in the range of about 25 to about 40 weight percent or more; mixing said filter cake with the requisite amount of crushed coal or coal fines and sufficient refuse derived fuel (RDF) and/or paper waste to produce a mixture having a moisture content in the range of from about 12 to about 22 percent, preferably from about 14 to about 19 weight percent suitable for pressing into briquettes, compacting the mixture into pellets or briquettes, and gasifying the briquettes or pellets.

Throughout this application, the term "sewage sludge" designates the solid components of municipal sanitary sewage including raw undried sludge, dewatered sludge, and the solids residue resulting from drying the sludge. The term "lignin" as used herein is intended to include those lignin derivatives present in black liquor from the paper industry including lignosulfonates. The term "dewatered sewage sludge", as used herein designates sewage sludge from which part of the water has been mechanically removed to concentrate the sewage sludge solids to 25 to 40 percent or more by weight.

The term "briquettes" is intended to cover the compacted articles of the invention regardless of their shape or size and regardless of the method of compacting. As used in the claims, unless otherwise indicated, briquettes includes extrusions, pellets, and other shapes which have been subjected to the requisite compaction pressure.

### Examples 1 to 6

Pillow shaped briquettes approximately 5,72 x 5,72 x 3,8 cm (2 1/4 x 2 1/4 x 1 1/2 inches) in size are produced from a blended feed mixture of dewatered sewage sludge, refuse derived fuel and/or shredded waste paper, Eastern bituminous caking coal, lime and a binder as specified in the table below.

Blending is carried out in a high-speed mixer marketed under the trade name Turbulizer by Bepex Corporation, Minneapolis, Minnesota and continuously fed to a Bepex rotary briquetting press by means of a compacting screw/feeder. The freshly-pressed briquettes issue from the press onto a vibrating screen which removes any fines for recycle to the mixer. The briquettes then are cooled and drying is begun in stream of ambient or warmed air.

Sewage sludge from the Passaic Valley Sewerage Commission plant in Newark, New Jersey is dewatered by centrifugation from 26 to 38 weight percent solids. The coal is 0,64 cm x 0 (1/4" x 0) crushed bituminous coal from Pittsburgh Seam No. 8 with a free swelling index of 8.1 from Champion No. 1 mine of Consolidation Coal Company of Pennsylvania containing 5 to 7 percent moisture. Lime, in the form of slaked lime, is employed as a binder supplement, biostat, and fluxing agent.

Binders for these examples are blackstrap molasses (Examples 1 and 2) containing 35 percent water; black liquor from the paper industry (Examples 4 and 6) containing 50 percent water; and Norlig, a commercially available anhydrous form of lignin sulfonate. (Examples 3 and 5).

**TABLE I**

| | EXAMPLES | | | | | |
|---|---|---|---|---|---|---|
| Dewatered Sewage Sludge (DSS) | 1 | 2 | 3 | 4 | 5 | 6 |
| | | | | | | |
| Parts by weight | 100 | 100 | 100 | 100 | 100 | 100 |
| Parts solids (by wt.) | 26 | 32 | 38 | 32 | 38 | 26 |
| Parts water by weight | 74 | 68 | 62 | 68 | 62 | 74 |
| | | | | | | |

| Refuse Derived Fuel (RFD) | | | | | | |
|---|---|---|---|---|---|---|
| | | | | | | |
| Parts by weight | ― | ― | 150 | 150 | 150 | 300 |
| Wt. % Moisture | ― | ― | 12 | 12 | 16 | 14 |
| Parts RDF (dry weight) | ― | ― | 132 | 132 | 126 | 258 |
| Parts water by weight | ― | ― | 18 | 18 | 24 | 42 |
| | | | | | | |

| Paper Waste (PW) | | | | | | |
|---|---|---|---|---|---|---|
| | | | | | | |
| Parts by weight | 150 | 200 | ― | ― | 100 | ― |
| Wt. % Moisture | 5 | 6 | ― | ― | 5 | ― |
| Parts Paper (dry wt.) | 142 | 188 | ― | ― | 95 | ― |
| Parts Water by weight | 8 | 12 | ― | ― | 5 | ― |
| | | | | | | |

| Coal | | | | | | |
|---|---|---|---|---|---|---|
| | | | | | | |
| Parts Coal by weight | 250 | 250 | 250 | 350 | 300 | 400 |
| Wt. % Moisture | 5 | 7 | 7 | 6 | 6 | 5 |
| Parts Coal (dry wt.) | 238 | 233 | 233 | 329 | 282 | 380 |
| Parts Water by weight | 12 | 17 | 17 | 21 | 18 | 20 |
| | | | | | | |

| Lime | | | | | | |
|---|---|---|---|---|---|---|
| | | | | | | |
| Wt. % | 3 | 4 | 5 | 4 | 3 | 5 |
| Parts by weight | 14 | 24 | 28 | 26 | 21 | 45 |
| | | | | | | |

| Binder | | | | | | |
|---|---|---|---|---|---|---|
| | | | | | | |
| Weight % binder | 3 | 4 | 4 | 5 | 5 | 6 |
| Wt. % Moisture | 35 | 35 | 5 | 50 | 5 | 50 |
| Parts by weight | 14 | 24 | 22 | 32 | 35 | 54 |
| Parts Water by weight | 5 | 8 | 1 | 16 | 2 | 27 |
| | | | | | | |
| Total Moisture (wt. %) | 18.7 | 17.6 | 17.8 | 18.7 | 15.7 | 18.1 |
| | | | | | | |
| Ratio Coal to Dry Waste | 1.4 | 1.1 | 1.4 | 2.0 | 1.1 | 1.3 |

In another embodiment of this invention, dewatered sewage sludge (DSS) is compacted with waste paper or partially dried refuse derived fuel (RDF) to form pellets, or briquettes, which may then be shipped to a distant location where they are comminuted, mixed with crushed coal or coal fines, and again compacted to produce a highly desirable feedstock for moving burden gasifiers of the slagging or non-slagging variety.

Alternatively, the pellets of dewatered sewage sludge (DSS) compacted with refuse derived fuel (RDF) and/or paper waste may be utilized as a fuel in a fluidized bed combustor or in a conventional boiler adapted for use of this fuel.

The following examples specify formulations appropriate for the production of pellets or briquettes of sewage sludge and paper or refuse derived fuel (RDF) and for the use of these pellets or briquettes for the production of briquettes of coal, paper and/or refuse derived fuel (RDF), and sewage sludge.

### Example 7

100 parts by weight of a centrifuge cake of dewatered sewage sludge (DSS) containing 35 weight percent solids, 300 parts of paper waste (containing about 5 percent moisture), 40 parts of lime, and 15 parts of Norlig, are mixed in a "Turbulizer" high-speed mixer, and the mixture is fed to a Simon Barron pellet mill where it is to be extruded in the form of 2,5 cm (1 inch) diameter pellets, broken to 3,8 cm (1.5 inch) lengths. The extruded pellets pass through a drying tunnel, where they are cooled and dried in a current of heated air to a moisture content of about 10 weight percent.

100 parts of the above-described pellets, 100 parts of crushed caking coal (0,95 cm x 0) (3/8" x 0), and 10 parts of blackstrap molasses are charged to a "Turbulizer" mixer with sufficient water to provide a water concentration in the range of 14 to 18 percent. The mixture is passed through the high speed mixer with sufficient residence-time to provide for adequate comminution of the dewatered sewage sludge (DSS)/waste pellets. The blended comminuted mixture is fed to a Bepex rotary briquetting press to produce pillow-shaped briquettes, 5,72 x 5,72 x 3,8 cm (2.25 x 2.25 x 1.5 inches) in size. The emerging briquettes are cooled in a drying tunnel with a countercurrent stream of ambient air.

### Example 8

Refuse derived fuel (RDF) comminuted to minus 2,5 cm (1 inch), is dried to a moisture content of about 10 percent. 100 parts of dewatered sewage sludge (DSS) centrifuge cake (containing 35 percent solids), 400 parts of the dried refuse derived fuel (RDF), 50 parts of lime, and 20 parts of Norlig binder are charged to a Turbulizer mixer with thorough mixing and blending. The mixture is then fed, by means of a compacting screw feeder, to a Bepex rotary briquetting press and formed into pillow-shaped briquettes, 5,72 x 5,72 x 3,8 cm (2.25 x 2.25 x 1.5 inches) in size. The briquettes, which emerge from the press steaming hot, are cooled and partially dried in a countercurrent stream of ambient air.

The resulting briquettes are crushed, mixed with one to two parts caking coal fines per part of dewatered sewage sludge (DSS)/waste briquettes, and mixed in a Turbulizer mixer together with 4 percent black liquor (containing about 50 percent ligninsulfonate). Depending on the moisture content of the coal, sufficient water is added so that the moisture content of the blended mixture is in the range of 14 to 18 percent. The resulting mixture is fed by means of a compacting screw feeder to a Bepex rotary briquetting press to form pillow-shaped briquettes of desired size. The steaming hot briquettes issuing from the press are cooled in a tunnel dryer in a stream of countercurrent ambient air.

## Claims

1. A composition in the form of bricks, briquettes or pellets useful as fuel formed by compressing at a pressure in the range of from about 69 to about 690 bar (about 1,000 to about 10,000 pounds per square inch) a mixture consisting essentially of dewatered sewage sludge containing from about 25 to about 40 weight percent solids and comminuted cellulosic waste containing 5 to 10 weight percent moisture selected from the group consisting of paper waste and refuse derived fuel in relative proportions in the range of from about 1,5 to about 5 parts by weight of cellulosic waste per part dewatered sewage sludge wherein said mixture has a moisture content in the range of from about 12 to about 22 weight percent prior to formation of said bricks, briquettes or pellets.

2. A composition as defined in claim 1 additionally containing crushed or finely devided coal, wherein the ratio of coal to cellulosic waste solids and sewage sludge solids is in the range of from about 1:1 to about 3:1 and the ratio of cellulosic waste to dewatered sewage sludge is in the range of from about 1.5:1 to about 5:1 or higher and wherein the moisture content of the resulting mixture is in the range of from about 12 to about 22 weight percent.

3. A composition as defined in claim 2 wherein the coal is a bituminous caking coal.

4. A composition as defined in any of the preceeding claims wherein the mixture also includes from about 2 to about 6 percent dry weight basis of the mixture of a binder material.

5. A composition as defined in claim 4 wherein the binder material is selected from the group consisting of molasses, black liquor, lignin sulfonate derivatives, brewery waste, starch wastes, slaked lime, unslaked lime, bitumen and pitch.

6. A composition as defined in claim 2 wherein the coal is a non-caking coal and the composition also contains from about 2 to about 6 weight percent bitumen or pitch.

7. A composition as defined in any of the preceeding claims wherein the mixture also contains an oxide or hydroxide of calcium.

## Patentansprüche

1. Zusammensetzung in der Form von Ziegeln, Briketts oder Pellets zur Verwendung als Brennstoff geeignet, hergestellt durch Pressen in dem Druckbereich von etwa 69 bis 690 bar (etwa 1000 bis 10000 pounds per square inch) eines Gemisches, das im wesentlichen aus entwässertem Klärschlamm mit etwa 25 bis etwa 40 Gewichtsprozent Feststoffen und zerkleinerten Zelluloseabfall mit 5 bis 10 Gewichtsprozent Feuchtigkeit, ausgewählt aus der aus Papierabfall und Abfallbrennstoff bestehenden Gruppe in relativen Anteilen von etwa 1,5 bis etwa 5 Gewichtsteilen Zelluloseabfall pro Teil entwässerten Klärschlamms besteht, wobei das Gemisch einen Feuchtigkeitsgehalt in dem Bereich von etwa 12 bis etwa 22 Gewichtsprozent vor der Formung der Ziegel, Briketts oder Pellets aufweist.

2. Zusammensetzung gemäß Definition in Anspruch 1, zusätzlich mit gebrochener oder fein zerteilter Kohle, wobei das Verhältnis von Kohle zu Zelluloseabfall-Feststoffen und Klärschlamm-Feststoffen im Bereich von etwa 1:1 bis etwa 3:1 liegt, und das Verhältnis von Zelluloseabfall zu entwässerten Klärschlamm im Bereich von etwa 1,5:1 bis etwa 5:1 oder höher liegt und wobei der Feuchtigkeitsgehalt in dem Bereich von etwa 12 bis etwa 22 Gewichtsprozent liegt.

3. Zusammensetzung gemäß Definition in Anspruch 2, wobei die Kohle eine bituminöse Backkohle ist.

4. Zusammensetzung gemäß Definition in einem der vorstehenden Ansprüche, wobei das Gemisch auch ein Bindermaterial im Anteil von etwa 2 bis etwa 6 Prozent auf Trockengewichtsbasis des Gemisches enthält.

5. Zusammensetzung gemäß Definition in Anspruch 4, wobei das Bindermaterial aus der aus Melassen, Schwarz lauge , Ligninsulfonatderivaten, Brauereiabfall, Stärkeabfällen, gelöschtem Kalk, ungelöschtem Kalk, Bitumen und Pech bestehenden Gruppe gewählt wird.

6. Zusammensetzung gemäß Definition in Anspruch 2, wobei die Kohle eine nicht-backenden Kohle ist und die Zusammensetzung auch Bitumen oder Pech mit etwa 2 bis etwa 6 Gewichtsprozent enthält.

7. Zusammensetzung gemäß Definition in einem der vorstehenden Ansprüche, wobei das Gemisch auch ein Oxid oder Hydroxid von Kalzium enthält.

## Revendications

1. Composition sous la forme de briques, briquettes ou de boulettes utiles en tant que combustibles formés par compression, sous une pression dans la plage d'environ 69 à environ 690 bars (environ 1000 à environ 10 000 pounds par square inch), d'un mélange constitué essentiellement de boues d'eaux d'égouts déshydratées contenant environ 25 à environ 40 % en poids de matières solides et de déchets cellulosiques déchiquetés contenant 5 à 10 pour cent en poids d'humidité, choisis dans le groupe constitué de déchets en papier et de rejets dérivés d'un combustible dans des proportions relatives comprises dans la plage d'environ 1,5 à environ 5 parties en poids de déchets cellulosiques par partie de boues d'eaux d'égouts déshydratées, dans laquelle ledit mélange a une teneur en humidité comprise dans la plage d'environ 12 à environ 22 pour cent en poids avant la formation desdites briques, briquettes ou boulettes.

2. Composition selon la revendication 1, contenant en outre du charbon broyé ou finement divisé, dans laquelle le rapport du charbon aux matières solides des déchets cellulosiques et aux matières solides des boues d'eaux d'égouts est compris dans la plage d'environ 1:1 à environ 3:1 et le rapport des déchets cellulosiques aux boues d'eaux d'égouts déshydratées est compris dans la plage d'environ 1,5:1 à environ 5:1 ou plus, et dans laquelle la teneur en humidité du mélange résultant est comprise dans la plage d'environ 12 à environ 22 pour cent en poids.

3. Composition selon la revendication 2, dans laquelle le charbon est un charbon agglutinant bitumineux.

4. Composition selon l'une quelconque des revendications précédentes, dans laquelle le mélange comprend aussi environ 2 à environ 6 pour cent en poids sur base sèche du mélange d'une matière servant de liant.

5. Composition selon la revendication 4, dans laquelle la matière servant de liant est choisie dans le groupe constitué des mélasses, liqueur noire, dérivés de sulfonate de lignine, d'eaux résiduaires de brasseries, de résidus d'amidon, de chaux éteinte, de chaux vive, de bitume et de brai.

6. Composition selon la revendication 2, dans laquelle le charbon est un charbon non agglutinant et la composition contient aussi environ 2 à environ 6 pour cent en poids de bitume ou de brai.

7. Composition selon l'une quelconque des revendications précédentes, dans laquelle le mélange contient aussi un oxyde ou un hydroxyde de calcium.
